# EUROPEAN PATENT APPLICATION

(11) **EP 3 815 511 A1**
(43) Date of publication of application: **05.05.2021**
(21) Application number: 19889491.7
(22) Date of filing: 01.10.2019
(51) Int. Cl.: A01G 9/02, A01G 7/04, A01G 27/02, F24F 3/16, B44C 5/06

(54) **MOUNTABLE PLANT CULTIVATION APPARATUS**

(30) Priority: 30.11.2018 KR 20180152904
(71) Applicant: Lee, Dae Hun, Seoul 05354 (KR)
(72) Inventor: Lee, Dae Hun, Seoul 05354 (KR)
(74) Representative: Ter Meer Steinmeister & Partner
(86) International application number: PCT/KR2019/012847
(87) International publication number: WO 2020/111492

(57) **Abstract**

A mountable plant cultivation apparatus capable of being mounted on an outer surface of a mounting object, according to the present invention, comprises: a housing disposed along an outer surface of a mounting object to have an adjustable length; and a planting part which is disposed in one side of the housing and in which a plant is planted.

## Description

### Technical Field

The present invention relates to a mountable plant cultivation apparatus which is mounted on an outer surface of a mounting object to allow plants to grow therein and observe the plants from the outside.

### Background Art

Plants are cultivated in pots for ornamental purposes to purify the indoor air in homes or offices or for interior decoration. Common pots take up a lot of space and may be cumbersome to check the condition of the plants from time to time.

In particular, if a pot is placed on a desk in an office using a computer, it may be helpful for emotional stability, but due to the space occupied by the pot, there is an inconvenience that the pot often falls down in a process of using other office supplies.

As the related arts, in the case of Korean Laid-open Utility Model Publication No. 20-2013-0003276 (flowerpot with hanger for monitor) and Korean Laid-open Patent Publication No. 10-2016-0038823 (multi-purpose storage box for monitor mounting), there is disclosed a mounting apparatus capable of being attached to the top of a computer monitor.

However, in the related arts, since a general pot is mounted on a part of the outer surface of the monitor, there is a problem in that it is difficult to manage the plant when the plant grows and is elongated.

In addition, when the pot is installed in a living space or an office space, there is a problem that the space occupied by the pot interferes with daily life or works.

In addition, since the related arts can be mounted only on a mounting object having a rectangular outer surface such as a monitor, there is a problem in that its use is limited.

### Disclosure

### Technical Problem

The present invention is derived to solve the problems in the related arts described above and an object of the present invention is to provide a mountable plant cultivation apparatus capable of growing a plant along a housing installed on outer surface of a mounting obj ect.

In addition, since the housing is installed along the outer surface of the mounting object and the length thereof is adjustable, the present invention is to provide a mountable plant cultivation apparatus capable of being easily managed even when plants grow.

In addition, the present invention is to provide a mountable plant cultivation apparatus that is installed on an outer surface of the mounting object other than an existing space where pots exist to have a small space occupied by a living space or an office space so as not to interfere.

Further, the present invention is to provide a mountable plant cultivation apparatus which can be installed even in mounting objects having various shapes other than a mounting object having a rectangular shape when a housing is formed to fit a shape of the outer surface of the mounting object.

The objects of the present invention are not limited to the above-mentioned objects, and other objects not mentioned can be clearly understood to those skilled in the art from the following description.

### Technical Solution

In order to achieve the objects, a mountable plant cultivation apparatus capable of being mounted on at least a part of an outer surface of a mounting object may comprise: a housing disposed along an outer surface of a mounting object to have an adjustable length; and a planting part which is disposed in one side of the housing and in which a plant is planted.

The housing may be made of a transparent material.

In addition, the mountable plant cultivation apparatus may comprise one or more pores which are formed in at least one of side surfaces and an upper surface of the housing and through which air passes; and rulers capable of checking a growth length of the plant.

The mountable plant cultivation apparatus may comprise a water supply device attached to the water inlet.

The mountable plant cultivation apparatus may comprise LED lightings attached to the top of the housing for the growth of the planted plant.

In addition, the shape of the housing may be formed in a shape in which block models are stacked in a longitudinal direction.

A mountable plant cultivation apparatus of the present invention may comprise a first member having a rod shape and having a slidable fastening portion formed with at least a part of the entire first member, a second member which is inserted and fastened with the fastening portion of the first member and has the fastening portion on an end thereof, a third member which is inserted and fastened with the fastening portion of the second member, includes a water inlet formed on a side surface to inject water, and is formed in a ' 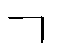 ' shape, a planting part which includes a slidable fastening portion having a top inserted to the end of the third member and is disposed on one side of the third member and in which a plant is planted, and a fixing means which mounts the first member to the third member on an edge of the mounting object.

The first member to the third member may be made of transparent materials.

In addition, the first member to the third member may comprise one or more pores which are formed in at least one of side surfaces and an upper surface thereof and through which air passes, and rulers capable of checking a growth length of the plant.

The mountable plant cultivation apparatus may comprise a water supply device attached to the water inlet.

The mountable plant cultivation apparatus may comprise LED lightings attached to the tops of the first member to the third member for the growth of the planted plant.

The mountable plant cultivation apparatus may comprise a rod-shaped water barrier capable of blocking at least some of the pores to prevent the water from overflowing from the pores to the outside.

A mountable plant cultivation apparatus capable of being mounted on an outer surface of a mounting object according to another embodiment of the present invention may comprise a housing disposed along an outer surface of a mounting object, and planting parts which are disposed in both sides of the housing and in which a plant is planted.

### Advantageous Effects

The mountable plant cultivation apparatus of the present invention for solving the above problems has the following effects.

First, since the housing is installed on the outer surface of the mounting object other than an existing space where pots have existed and the plant grows along the housing, it is possible to minimize a volume occupied by the housing. Therefore, there is an advantage in that the space occupied by the plant cultivation apparatus of the present invention does not interfere with daily life or works and plants can grow sufficiently.

Second, since the mountable plant cultivation apparatus can be installed on monitors, furniture, partitions, and white boards that people use frequently, it is easy to be managed. That is, since the mountable plant cultivation apparatus is disposed in a position that can be seen frequently in a person's field of view, there is an advantage in that it is easy to determine the condition of the plant and it is convenient to supply water.

Third, the present invention is to provide a plant cultivation apparatus that can have an aesthetic effect by growing plants in a person's living environment space and bring comfort by an effect of air purification according to a type of plant.

The effects of the present invention are not limited to the aforementioned effect, and other effects not mentioned above will be clearly understood to those skilled in the art from the description of the appended claims.

### Description of Drawings

FIG. 1 is an exemplary view showing a state where a mountable plant cultivation apparatus according to an embodiment of the present invention is installed on a monitor.
FIG. 2 is an exemplary view showing a state of the mountable plant cultivation apparatus according to the embodiment of the present invention.
FIG. 3 is an exemplary view showing an exploded view of the mountable plant cultivation apparatus according to the embodiment of the present invention.
FIG. 4 is an exemplary view showing a state where a water supply device is attached in the mountable plant cultivation apparatus of the embodiment of the present invention.
FIG. 5 is an exemplary view showing a state where LED lightings are attached in the mountable plant cultivation apparatus of the embodiment of the present invention.
FIG. 6 is an exemplary view showing a state where a water barrier is attached in the mountable plant cultivation apparatus of the embodiment of the present invention.
FIG. 7 is an exemplary view showing a state where a mountable plant cultivation apparatus according to another embodiment of the present invention is installed on a monitor.

### Best Mode

A mountable plant cultivation apparatus capable of being mounted on an outer surface of a mounting object, according to the present invention, comprises: a housing disposed along an outer surface of a mounting object to have an adjustable length; and a planting part which is disposed in one side of the housing and in which a plant is planted.

### Modes of the Invention

Hereinafter, some embodiments of the present invention will be described in detail through exemplary drawings. When reference numerals refer to components of each drawing, it is to be noted that although like components are illustrated in different drawings, like components are denoted by the same reference numerals as possible. Further, in describing the embodiments of the present invention, a detailed explanation of known related configurations and functions may be omitted to avoid interruption of understanding of the embodiments of the present invention.

In addition, expressions such as 'first, second' are used only for distinguishing a plurality of components, and do not limit the order or other features between the components.

A mountable plant cultivation apparatus 10 of the present invention may be constituted by a housing disposed along an outer surface of a mounting object 20 to have an adjustable length, and a planting part 400 which is disposed in one side of the housing and in which a plant is planted.

The housing may be formed in various shapes, and the shape of the housing may be formed to fit the shape of the outer surface of the mounting object 20. The shape of the mounting object 20 is not necessarily limited to a polygon such as a rectangular monitor. Even if the mounting object has a curved surface, a housing is formed to fit the shape of the outer surface of the mounting object 20 and may be formed so that the planting part 400 in which the plant is planted is coupled to one side.

The housing may be formed along the outer surface of the mounting object 20 to have an adjustable length. Therefore, the housing may be installed to fit the length of the mounting object 20 by adjusting the length of the housing, and when the plant grows and it is required to further extend the housing, the length of the housing may be adjusted.

The planting part 400 in which the plant is planted is disposed on at least one side of the housing. If necessary, soil may be filled in the planting part 400. When the plant is planted in the planting part 400, the plant may continue to grow along the housing from the planting part 400.

The type of plant is preferably an ornamental vine plant that easily grows along the inside of the housing, but is not necessarily limited thereto. In the case of vine plants, a central rod may be installed inside the housing to help the growth of the plant. If the central rod is installed, the vine plant may grow along the central rod.

The housing may be made of a transparent material. The transparent housing is visible inside so that people can observe the plant from the outside. Therefore, the transparent housing is suitable as an ornamental pot and may give emotional stability to people who see plants in spaces such as homes and offices.

In addition, in at least one of side surfaces and an upper surface of the housing, at least one pore 800 through which air passes, and a ruler 810 capable of checking a growth length of the plant may be formed.

The air flows in and out through the pores 800 so that the air may smoothly circulate.

The air required for plant growth may flow into the housing through the pores 800, and oxygen discharged from the plant may be flow out to the outside. In particular, in the case of planting air-purifying plants, it is effective in improving a living environment by continuously purifying external air.

The rulers 810 may be formed at regular intervals so that a person can visually check the growth degree of the plant.

In addition, the ruler 810 may be disposed around the pore 800 to have a structure in which the sun rises and sets in the garden. That is, the pore 800 may be formed in a semicircular shape, and the ruler 810 may be formed in a smaller circle than the pore 800 so that each ruler 810 may be disposed in a structure that passes over the pore 800. Therefore, the viewer may have a function of not only seeing the growth of plants while looking at the ruler 810, but also feeling the aesthetic sense when seeing the ruler 810.

A water supply device 700 may be coupled to a water inlet 310 of the housing.

When water is supplied to the water supply device 700, a certain amount of water may be supplied over time, so that there is an advantage in that it is convenient to be managed.

In addition, LED lightings 600 may be attached to the top of the housing. Depending on a type of plant, the LED lighting 600 outputting light having a wavelength that provides light required for growth is installed to promote the growth of the plant. A device capable of adjusting the light intensity may be coupled to the LED lighting 600 to select an appropriate lighting intensity according to the growth degree of the plant.

In addition, the shape of the housing may be formed in a shape in which blocks are stacked in a longitudinal direction. A surface of the housing in contact with the mounting object 20 may be formed to fit the outer surface of the mounting object, and a top thereof may be used for decoration by forming a shape that improves aesthetics such as a stacked shape of blocks.

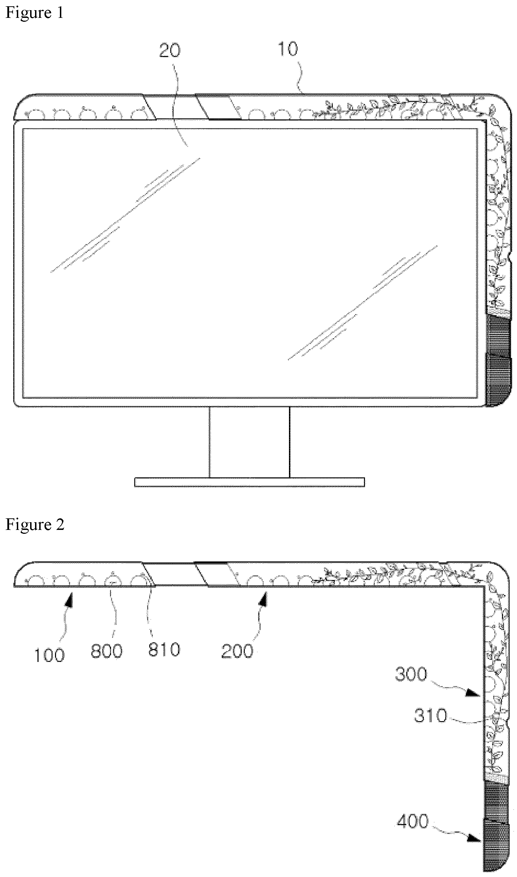

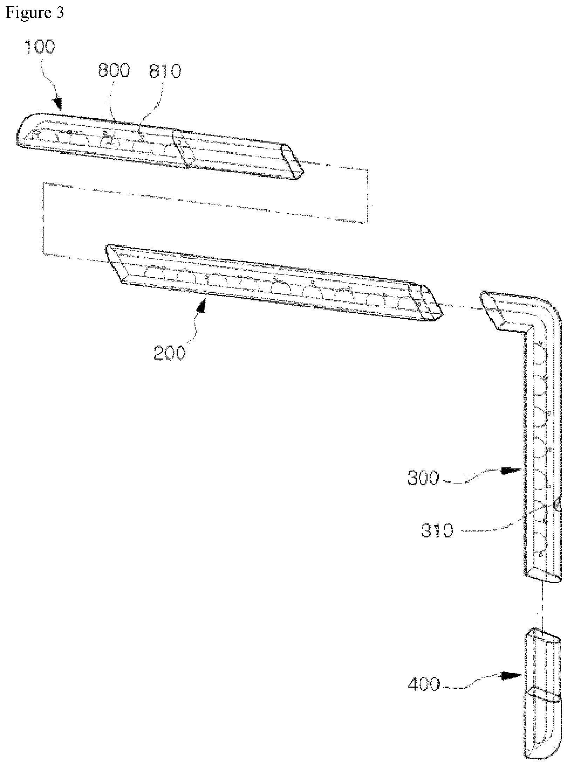

FIG. 1 is an exemplary view showing a state where a mountable plant cultivation apparatus 10 according to an embodiment of the present invention is installed on a monitor, FIG. 2 is an exemplary view showing a state of the mountable plant cultivation apparatus 10 according to the embodiment of the present invention, and FIG. 3 is an exemplary view showing an exploded view of the mountable plant cultivation apparatus 10 according to the embodiment of the present invention.

Referring to FIGS. 1 to 3, the mountable plant cultivation apparatus 10 according to an embodiment of the present invention is a mountable plant cultivation apparatus 10 according to a case of being installed on the mounting object 20 having a rectangular outer surface, such as a monitor.

As shown in FIG. 3, the housing may be configured by three members of a first member 100, a second member 200, and a third member 300 to be attached to a part of the rectangular outer surface and a planting part 400.

The first member 100 may have a rod shape, and a part of the entire first member 100 may be formed of a slidable fastening portion.

The fastening portion of the first member 100 has a width smaller than the width of the remaining portion to be coupled to the second member 200. Depending on the length of the mounting object 20, the length of the fastening portion may be adjusted by sliding in a longitudinal direction. Therefore, the fastening portion may be formed by setting the length of the fastening portion according to the length of the mounting object 20.

In addition, the length inserted into the second member 200 of the fastening portion of the first member 100 may be adjusted according to the growth degree of the plant growing inside the housing. That is, when the plant continues to grow and reaches the end of the first member 100, a space in which the plant may grow may be secured by adjusting the fastening portion without cutting the plant.

The second member 200 may have a rod shape, and a part of the entire second member 200 may be formed of a slidable fastening portion. The fastening portion of the second member 200 has a width smaller than the width of the remaining portion to be coupled to the third member 300, like the fastening portion of the first member 100.

The fastening portion of the first member 100 is inserted and coupled to one side of the second member 200. The other side may be formed of a slidable fastening portion, and the fastening portion is inserted and fastened to the third member 300, thereby serving to connect the first member 100 and the third member 300.

The third member 300 may be formed in a ' 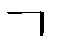 ' shape. In the mounting object 20 having a rectangular shape, such as a monitor, one side and the other side are formed in a ' 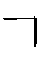 ' shape to be attached to a horizontal or vertical portion.

One side of the third member 300 is inserted with the fastening portion of the second member 200, and the other side is inserted with the planting part 400 in which the plant is planted.

A water inlet 310 through which water may be injected is formed on the side surface of the third member 300. When water is injected through the water inlet 310, the water flows into the planting part 400 so that the plant may grow.

The plant is planted in the planting part 400. If necessary, soil may be contained in the bottom of the planting part 400. A part of the planting part 400 has a fastening portion that may be fastened to the third member 300, and the fastening portion has a width smaller than that of the third member 300.

The fastening portion of the planting part 400 is slidably coupled to the third member 300. As the plant planted in the planting part 400 grows, the plant extends to the third member 300, and when the plant continues to grow, the plant may grow up to the second member 200 and the first member 100. A vain plant grows along the central rod.

A fixing means may mount the first member 100, the second member 200, and the third member 300 on the outer surface of the mounting object 20. The fixing means can be any known one that functions to mount an object, such as a transparent double-sided tape.

The first member 100, the second member 200, and the third member 300 may be made of transparent materials. Therefore, a person may observe the growth of internal plants from the outside to feel emotionally stable.

In addition, in at least one of side surfaces and an upper surface of the first member 100, the second member 200, and the third member 300, at least one pore 800 through which air passes, and a ruler 810 capable of checking a growth length of the plant may be formed. The air flows in and out through the pores 800 so that the air may smoothly circulate.

The air required for plant growth may flow into the inside where the plant grows through the pores 800, and oxygen discharged from the plant may be flow out to the outside. In particular, in the case of air-purifying plants, it is effective in improving a living environment by continuously purifying external air. In addition, the water may be supplied through the pores 800.

The pores 800 and the rulers 810 may have a semicircular shape and a circular shape, as in the above-described case, and may be arranged in a structure where the sun rises and sets in the garden.

Since the mountable plant cultivation apparatus 10 of the present invention is attached to the mounting object 20, the mountable plant cultivation apparatus 10 may be provided with a fixing means that is easily attached. Any fixing means can be used as long as the fixing means has an adhesive force such as a double-sided tape.

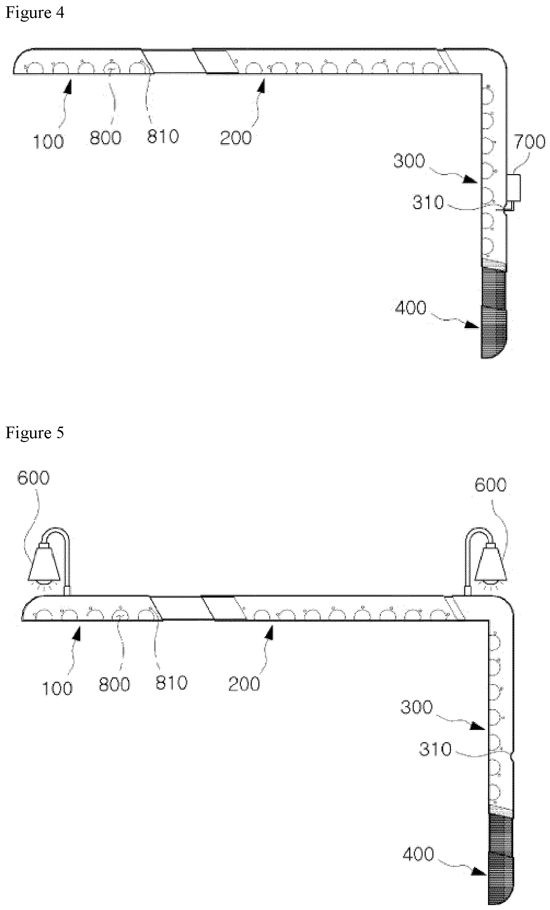

FIG. 4 is an exemplary view showing a state where the water supply device 700 is attached in the mountable plant cultivation apparatus 10 according to the embodiment of the present invention.

As shown in FIG. 4, the water supply device 700 may be coupled to the water inlet 310 of the third member 300. When water is supplied to the water supply device 700, a certain amount of water may be supplied over time, so that there is an advantage in that it is convenient to be managed.

FIG. 5 is an exemplary view showing a state where the LED lightings 600 are attached in the mountable plant cultivation apparatus 10 according to the embodiment of the present invention.

As shown in FIG. 5, the LED lightings 600 may be attached to the tops of the first to third members 300. Depending on a type of plant, the LED lighting 600 outputting light having a wavelength that provides light required for growth is installed to promote the growth of the plant growth. A device capable of adjusting the light intensity according to the growth degree of the plant may be coupled to the LED lighting 600.

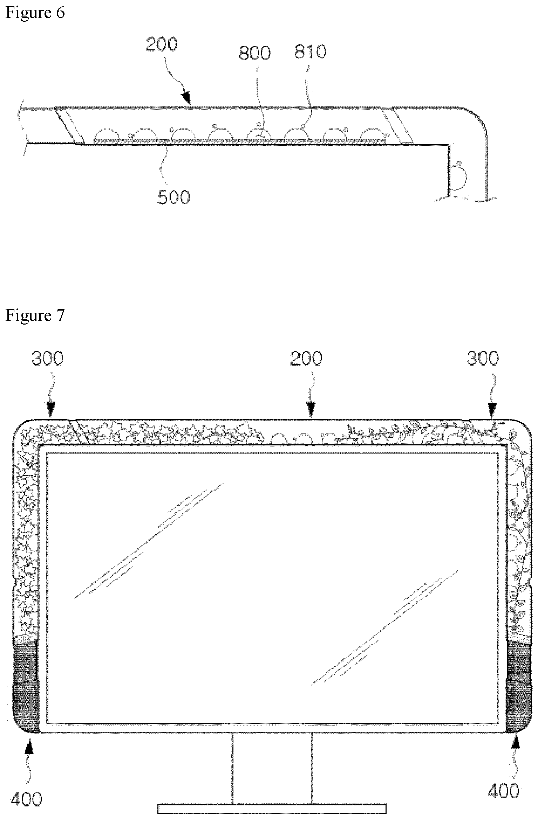

FIG. 6 is an exemplary view showing a state where the water barrier 500 is attached in the mountable plant cultivation apparatus 10 according to the embodiment of the present invention.

As shown in FIG. 6, if the water barrier 500 is mounted on the pores 800, it is possible to prevent water from overflowing through the pores 800. Water may be injected through the water inlet 310, but there may be a case where water may be injected through the pores 800 if necessary. When water is injected through the pores 800, the water may overflow into the pores 800, and thus, the water barrier 500 is coupled to prevent the water from overflowing.

FIG. 7 is an exemplary view showing a state where a mountable plant cultivation apparatus 10 according to another embodiment of the present invention is installed on a monitor.

As shown in FIG. 7, the mountable plant cultivation apparatus 10 of the present invention may be installed on the entire outer surface of the mounting object 20. In this case, the planting part 400 may be installed only on one end of the housing and a planting part 400 may be further installed on the other end to cultivate a plurality of plants.

In addition, the cross sections of the housing and the first to third members may have angular shapes such as a rectangle or elliptical curved shapes. Therefore, it is possible to manufacture the mountable plant cultivation apparatus 10 suitable for a surrounding environment by selecting a suitable shape as needed.

In addition, when the housing is mounted on the mounting object 20, a hanger that can be hung on the mounting object 20 may be attached to the housing to prevent the housing from being pushed back. That is, the hanger is hung on the mounting object 20 to prevent the housing from being pushed back. The hanger may also be included in the first member 100, the second member 200, and the third member 300 in the case of the embodiment of the present invention.

As described above, the prepared embodiments of the present invention have been described and it will be apparent to those skilled in the art that the present invention can be materialized in other specific forms without departing from the gist or scope in addition to the above described embodiments. Therefore, the aforementioned embodiments are not limited but should be considered to be illustrative, and accordingly, the present invention is not limited to the above description and may be modified within the scope of the appended claims and a range equivalent thereto.

## Claims

1. A mountable plant cultivation apparatus capable of being mounted on at least a part of an outer surface of a mounting object, comprising:
a housing disposed along an outer surface of a mounting object to have an adjustable length; and a planting part which is disposed in one side of the housing and in which a plant is planted.

2. The mountable plant cultivation apparatus of claim 1, wherein the housing is made of a transparent material.

3. The mountable plant cultivation apparatus of claim 1, comprising:
one or more pores which are formed in at least one of side surfaces and an upper surface of the housing and through which air passes; and
rulers capable of checking a growth length of the plant.

4. The mountable plant cultivation apparatus of claim 3, wherein a water inlet is formed on one side of the housing, and a water supply device attached to the water inlet is included.

5. The mountable plant cultivation apparatus of claim 1, comprising:
LED lightings attached to the top of the housing for the growth of the planted plant.

6. The mountable plant cultivation apparatus of claim 1, wherein the shape of the housing is formed in a shape in which block models are stacked in a longitudinal direction.

7. A mountable plant cultivation apparatus comprising:
a first member having a rod shape and having a slidable fastening portion formed with at least a part of the entire first member;
a second member which is inserted and fastened with the fastening portion of the first member and has the fastening portion on an end thereof;
a third member which is inserted and fastened with the fastening portion of the second member, includes a water inlet formed on a side surface to inject water, and is formed in a ' 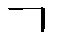 ' shape;
a planting part which includes a slidable fastening portion having a top inserted to the end of the third member and is disposed on one side of the third member and in which a plant is planted; and
a fixing means which mounts the first member to the third member on an edge of the mounting object.

8. The mountable plant cultivation apparatus of claim 7, wherein the first member to the third member are made of transparent materials.

9. The mountable plant cultivation apparatus of claim 7, wherein the first member to the third member comprises one or more pores which are formed in at least one of side surfaces and an upper surface thereof and through which air passes; and
rulers capable of checking a growth length of the plant.

10. The mountable plant cultivation apparatus of claim 7, comprising:
a water supply device attached to the water inlet.

11. The mountable plant cultivation apparatus of claim 7, comprising:
LED lightings attached to the tops of the first member to the third member for the growth of the planted plant.

12. The mountable plant cultivation apparatus of any one of claims 4 to 9, comprising:
a rod-shaped water barrier capable of blocking at least some of the pores to prevent the water from overflowing from the pores to the outside.

13. A mountable plant cultivation apparatus capable of being mounted on an outer surface of a mounting object, comprising:
a housing disposed along an outer surface of a mounting object; and
planting parts which are disposed in both sides of the housing and in which a plant is planted.
